# EUROPÄISCHE PATENTSCHRIFT

(11) **EP 2 071 959 B1**
(45) Veröffentlichungstag und Bekanntmachung des Hinweises auf die Patenterteilung: **09.12.2015**
(21) Anmeldenummer: 08021410.9
(22) Anmeldetag: 10.12.2008
(51) Int. Cl.: A22C 13/00, A23J 1/00, A23J 3/00

(54) **Kollagen-Konzentrat, dessen Verwendung sowie Verfahren zu seiner Herstellung**
Collagen concentrate, its use, as well as process for its fabrication.
Concentré de collagène, son usage, ainsi que procédé pour sa fabrication

(30) Priorität: 19.12.2007 DE 102007061710
(43) Veröffentlichungstag der Anmeldung: 24.06.2009
(73) Patentinhaber: Kalle GmbH, 65203 Wiesbaden (DE)
(72) Erfinder: Büker, Marion, 56379 Singhofen (DE); Büker, Gert, 56379 Singhofen (DE); Grolig, Gerhard, Dr., 64546 Mörfelden-Walldorf (DE)
(74) Vertreter: Plate, Jürgen

(56) Entgegenhaltungen:
- EP-A- 0 244 661
- US-A- 3 694 234
- US-A- 3 782 977
- US-A- 6 016 862
- US-A- 6 153 234
- Michael Meyer: "Thermisch-mechanischer Aufschluss von Rindshautkollagen", 5 December 2002 (2002-12-05), Technische Universität Dresden, Dresden page 1,3-13,30-35,

## Beschreibung

Die Erfindung betrifft ein Kollagen-Konzentrat sowie seine Verwendung bei der Herstellung von künstlichen, vorzugsweise eßbaren Nahrungsmittelhüllen.

Kollagen ist ein Faserprotein, das in Schwarten, Knorpel, Knochen und Haut enthalten ist. Zur Zeit sind 28 verschiedene Typen bekannt. Unter physiologischen Bedingungen ist Kollagen nicht löslich, kann jedoch durch Wärme, Basen oder schwache Säuren hydrolysiert werden. Wird ein hydrolysiertes Kollagen gereinigt, konzentriert, sterilisiert, getrocknet und gemahlen, entsteht daraus Gelatine, deren besondere Eigenschaft, erhebliche Mengen Wasser binden zu können, sie zahlreich bei einer Reihe von Lebensmitteln und Arzneimitteln Verwendung finden läßt.

Im Gegensatz hierzu handelt es sich bei Kollagen-Hydrolysat um enzymatisch hydrolysiertes Kollagen, das auch im Wasser löslich ist, also anders als Gelatine nicht mehr in der Lage ist, erhebliche Wassermengen zu binden. Es ist jedoch gut dispergierbar und emulsionsstabilisierend, weshalb es in der Kosmetikindustrie ebenso eingesetzt wird wie im Textil- und Lebensmittelbereich, z. B. in der Fleischwaren-, Süßwaren- und Getränkeindustrie. In der Pharmazie wird Kollagen als Tablettierungsmittel, Umhüllungsagens und Füllmittel verwendet.

Der spätere Verwendungszweck des Kollagens spielt bereits bei der Herstellung der Kollagenmasse ein entscheidende Rolle. Das gilt besonders bei der Verwendung von Kollagen für Wursthüllen. Der Rohstoff für die Herstellung von Kollagendärmen (= Hautfaserdärmen), die je nach Hüllenstärke auch zum Mitverzehr geeignet sein können, wird aus tierischer Haut, bevorzugt Rinderhaut, gewonnen. Von der Innenseite der enthaarten und frisch gesalzenen oder leicht gekalkten Haut wird der Hautspalt abgetrennt (= abgespalten). Der dabei anfallende "Unterspalt" wird zunächst einem alkalischen Aufschluß bei einem pH-Wert von etwa 13 unterworfen, beispielsweise mit wäßrigem Kalium- oder Calciumhydroxid. Dabei lockert sich die Hautmatrix und wird flexibler. Durch Zusatz von Säure bis zum Erreichen eines pH-Werts von kleiner als 3,5 wird der Aufschluß beendet. Die so gewonnenen "Kollagenschwarten" werden grob gewolft und das gewolfte Material dann durch mehrere, hintereinander angeordnete Lochscheiben gedrückt, wobei der Durchmesser der einzelnen Löcher von Scheibe zu Scheibe kleiner wird. Erhalten wird auf diese Weise eine Kollagenpaste, die in große Kneter überführt wird.

Bei der Herstellung von Kollagendärmen, die erst später mit Wurstbrät oder einem anderen extrudierbaren Nahrungsmittel gefüllt werden sollen, ist die Kollagenmasse häufig noch mit Cellulosefasern vermischt, die den Därmen eine höhere Festigkeit verleihen. Der Anteil an Cellulosefasern beträgt zweckmäßig etwa 10 bis 25 Gew.-%, bezogen auf das Gewicht des Kollagens. Die Masse wird dann durch eine Ringschlitzdüse extrudiert und die gebildete Schlauchhülle anschließend stabilisiert. Dabei kann ein Trocken- oder ein Naßspinnverfahren eingesetzt werden. Beim Trockenspinnverfahren wird eine Kollagenmasse mit einem relativ hohen Gehalt an Trockensubstanz eingesetzt. Dadurch besitzt der Schlauch direkt nach dem Extrudieren schon ausreichende Stabilität. Dafür wird allgemein eine Extrusionsmasse mit einem Anteil an Kollagen-Trockensubstanz von etwa 8 bis 15 Gew.-%, insbesondere von etwa 9 Gew.-%, eingesetzt (DE 2314 767; DE 23 36 561). Trocken extrudierte Kollagenhüllen lassen sich zudem unter Wärmeeinwirkung verformen. Anders als im Naßspinnverfahren lassen sich so auch eßbare Kranzdärme herstellen. Beim Naßspinnverfahren ist dagegen der Gehalt an Trockensubstanz in der Kollagenmasse geringer. Er beträgt allgemein etwa 3 bis 6 Gew.-%. Extrudiert wird in diesem Fall in ein Koagulationsbad, das eine wäßrige Ammoniumsulfat- oder Natriumchlorid-Lösung und zusätzlich noch Ammoniak als koagulierendes Medium enthält (s. B.A. Lang, G. Effenberger, Wursthüllen - Kunstdarm, Deutscher Fachverlag, Frankfurt a.M. , 3. Aufl. [2006] S. 58 - 63).

Für die Herstellung von eßbaren, d.h. für den Mitverzehr geeigneten Kollagendärmen werden üblicherweise sauer eingestellte, wäßrige Kollagenmassen mit einem Gehalt an Kollagen-Trockensubstanz von 3 bis 6 Gew.-% und etwa 0,6 bis 1,2 Gew.-% Cellulosefasern eingesetzt (US-A 4 615 889; EP-B 0 821 878). Sie müssen bei Lagerung und Transport ständig gekühlt werden, damit die Ausbreitung von zersetzend wirkenden Mikroorganismen verhindert wird. Je länger die Zeitdauer für Lagerung und Transport, um so größer ist zudem die Gefahr, daß die in der Masse enthaltene Säure das Kollagen angreift und chemisch zersetzt. Ein weiterer Nachteil ist, daß die Masse zu etwa 95 Gew.-% aus Wasser besteht, wodurch hohe Transportkosten entstehen, bezogen auf den Wert des Kollagenanteils. Da ein Großteil des auf dem Weltmarktgehandelten Kollagens aus Südamerika stammt, sind die Transportkosten ein wesentlicher ökonomischer Faktor. Zudem ist die Lagerhaltung aufwendig. Es werden Kühlhäuser und Kühlcontainer benötigt. Alternativ können die Häute getrocknet oder eingesalzen transportiert werden. Das Salz muß vor der weiteren Verarbeitung jedoch wieder herausgewaschen werden. Bekannt ist daneben ein Verfahren, bei dem ein Nahrungsmittel, insbesondere Wurstbrät, extrudiert und zugleich eine Schicht aus einem Kollagen-Gel um das Nahrungsmittel herum extrudiert wird (EP 0 618 771 B1). Das wäßrige Kollagen-Gel enthält vorzugsweise etwa 4 bis 10 Gew.-% an Kollagen, zusätzlich kann es noch geringe Mengen (0,1 bis 2,0 Gew.-%) an Cellulose enthalten. Es hat vorzugsweise einen pH-Wert von 1 bis 4. In diesem pH-Bereich nimmt das Kollagen-Gel besonders viel Wasser auf (90 bis 95 Gew.-%). Das Kollagen-Gel wird anschließend chemisch vernetzt, beispielsweise durch ein mit dem Kollagen-Gel vermischtes Vernetzungsmittel, wie Glutaraldehyd, Glyoxal, Flüssigrauch, Zucker oder einem mineralischen Gerbmittel. Es kann auch durch Behandeln mit einer Salzlösung koaguliert werden, die dem Kollagen-Gel Wasser entzieht, oder durch Erhöhen des pH-Werts bis dieser im isoelektrischen Bereich des Kollagens liegt. Ähnliche Verfahren sind aus den Dokumenten US 6 153 234 und US 6 016 862 bekannt.

Ein ganz ähnliches Coextrusionsverfahren ist in der EP 1 130 978 B1 offenbart. In diesem Verfahren wird ein mit Aktivkohle vorbehandelter, weitgehend farbloser Flüssigrauch mit einem pH-Wert von 5 bis 7 zum Härten des Kollagens eingesetzt. In dem Coextrusionsverfahren gemäß der WO 2006/051278 wird zum Härten deraus dem Kollagen-Gel hergestellten Umhüllung anstelle von Flüssigrauch oder einem anderen Vernetzer eine wäßrige Salzlösung eingesetzt, die zusätzlich Weinsäure enthält.

In den genannten Coextrusionsverfahren wird ein nach prinzipiell bekannten Verfahren hergestelltes Kollagen-Gel eingesetzt. Die Kollagenfasern werden dabei zerkleinert bis sie eine sehr feine Suspension bilden (WO 2006/051278). Kollagen-Konzentrate sind im Zusammenhang mit Coextrusionsverfahren nicht offenbart.

Es bestand daherdie Aufgabe, eine Kollagenmasse so zu konzentrieren, daß sich die beschriebenen Nachteile ausgleichen lassen. Das Konzentrat soll einen hohen Anteil an Trockensubstanz aufweisen, ohne Kühlung lager- und transportfähig sein und bei Raumtemperatur über einen Zeitraum von mindestens 6 Monaten mikrobiologisch stabil bleiben. Es soll sich zudem schnell und leicht in eine extrudierbare oder coextrudierbare Masse umwandeln lassen, die insbesondere für die Herstellung von eßbaren Kollagendärmen geeignet ist.

Gelöst wurden die genannten Aufgaben mit einem Konzentrat eines filmbildenden Kollagens (nachfolgend als "filmbildendes Kollagen-Konzentrat" bezeichnet), gemäß Anspruch 1, das in Wasser unlöslich, in verdünnter wäßriger Säure, beispielsweise verdünnter Essigsäure, jedoch quellbar ist. Das Protein in dem Konzentrat besteht überwiegend aus kovalent oder nicht-kovalent miteinander verbundenen Kollagenfasern, die bereits mit bloßem Auge sichtbar sind. Mehr als 80 Gew.-% der Bestandteile einer aus dem Konzentrat hergestellten homogenen Suspension mit einem Anteil an Trockensubstanz von 0,5 Gew.-% lassen sich durch Zentrifugieren als Bodensatz abtrennen. Gegenstand der Erfindung ist demgemäß ein filmbildendes Kollagen-Konzentrat, das dadurch gekennzeichnet ist, daß es mindestens 18 Gew.-% Kollagen-Trockensubstanz, bezogen auf das Gesamtgewicht des Konzentrats, enthält, wobei sich mindestens 50 Gew.-% des Proteins aus einer aus dem Konzentrat hergestellten homogenen Suspension in einem 0,15 molaren wäßrigen Natriumdihydrogenphosphat-Puffer mit einem pH von 7 und mit einem (rechnerischen) Anteil an Trockensubstanz von 0,5 Gew.-% durch 15 min Zentrifugieren bei 1780 RFC bei 15 °C als Bodensatz abtrennen lassen. Dies zeigt, daß der größte Teil des Kollagen-Konzentrats aus hochmolekularem Protein besteht.

Zur Bestimmung der Größen- bzw. Gewichtsverteilung des Proteins wurde eine Probe des Konzentrats in einem 0,15 molaren wäßrigen Natriumdihydrogenphosphat-Puffer (auf pH 7 eingestellt) gelöst bzw. suspendiert bis die Suspension 0,5 Gew.-% an Kollagen-Trockensubstanz enthielt. Die Suspension wurde dann 1 h lang bei 500 U/min in einem Becherglas bei 20 °C gerührt, wobei eine makroskopisch homogene Masse erhalten wurde. Die Suspension wurde dann zentrifugiert (1780 RFC; 15 °C; 15 min; (RFC = Relative Force of Centrifugation - dimensionslose Größe). Der Überstand wurde vorsichtig dekantiert und dann fraktioniert filtriert, und zwar zunächst über ein Siebgewebe mit einer Maschenweite von 60 µm, sodann über ein Siebgewebe mit einer Maschenweite von 1,2 µm. Das dabei erhaltene Filtrat wurde erneut filtriert, diesmal erst über ein Siebgewebe mit einer Maschenweite von 0,45 µm und dann von 0,2 µm. Bodensatz sowie Filterrückstände bei den einzelnen Filtrationen wurden getrocknet (je 1,5 h bei 40 °C, bei 60 °C und bei 80 °C, dann 16 h lang bei 101 °C) und ausgewogen. Die Trockengewichte der einzelnen Fraktionen sind in den Ausführungsbeispielen angegeben.

Allgemein haben mindestens 50 Gew.-% des Kollagens ein so hohes Molekulargewicht, daß es sich durch den beschriebenen Zentrifugiervorgang abtrennen läßt. Bevorzugt lassen sich mindestens 60, 65, 70, 75, 80 Gew.-%, 82,5, 85, 87,5, 90 oder 92,5 Gew.-% abtrennen.

Durch Zentrifugieren bei 1780 RFC (15 °C; 15 min) und Absaugen über ein Sieb mit einer Maschenweite von 60 µm lassen sich allgemein mindestens 60 Gew.-%, bevorzugt mindestens 75 Gew.-% des Kollagens abtrennen. Besonders bevorzugt sind es mindestens 80 Gew.-%, 85 Gew.-%, 87,5 Gew.-%, 90 Gew.-%, 92,5 Gew.-% oder 95 Gew.-%.

Eine Bestimmung der Molekulargewichtsverteilung durch Size Exclusion Chromatographie (SEC) oder durch Gelelektrophorese, insbesondere durch SDS-PAGE-Gelelektrophorese, ist nur eingeschränkt möglich. Zum einen haben die meisten Proteine ein so hohes Molekulargewicht, daß sie unter der Einwirkung des elektrischen Feldes nicht durch das Gel wandern, selbst wenn dieses großporig ist. Solche Proteine bleiben am Aufgabepunkt liegen. Außerdem gibt es praktisch keine (langgestreckten) Proteine mit definiertem Molekulargewicht, die zur Kalibrierung verwendet werden könnten. Schließlich bewirkt die Behandlung mit SDS-Lösung (SDS = Sodium Dodecylsulfate), insbesondere unter Wärmeeinwirkung, eine Denaturierung des Proteins. Dabei werden die Kollagen-Tripelhelices teilweise in Doppelstränge und/oder Einzelstränge aufgespalten. Bei der Gelelektrophorese haben die Proteine dann ein anderes Molekulargewicht als im Ursprungsmaterial, so daß kein zuverlässiges Ergebnis bei dieser Untersuchung erhalten wird.

Der Gehalt an Trockensubstanz in dem Kollagen-Konzentrat wird in der gleichen Weise bestimmt, d.h. eine genau ausgewogene Menge des Konzentrats wurde jeweils 1,5 h lang bei 40°C, bei 60 °C und bei 80 °C erwärmt, anschließend 16 h lang bei 101 °C (± 1 °C) in einem Trockenschrank erhitzt. Das danach verbliebene Material wird als Kollagen-Trockensubstanz bezeichnet. Aus der Gewichtsdifferenz läßt sich der Anteil an Trockensubstanz (TS) in dem Kollagen-Konzentrat berechnen. Aus einem mit verdünnter Säure gequollenen und damit verdünnten Konzentrat (nach dem Verdünnen etwa 3 bis 5 gew.-%ig) läßt sich ein abziehbarer Film herstellen, wenn es als dünne Schicht (etwa 1 mm) auf eine glatte Oberfläche, beispielsweise eine Glasplatte, aufgetragen und anschließend mit einer gesättigten wäßrigen NaCl-Lösung bei Raumtemperatur (etwa 15 min lang) behandelt wird. Der Film ist bereits vordem Trocknen selbsttragend. Dieser Film besteht aus einzelnen Fasern, die nicht notwendig kovalent miteinander verbunden sein müssen, jedoch allgemein durch Wasserstoff-Brückenbindungen oder ionische Bindungen miteinander verbunden sind.

Erfindungsgemäß besteht das Kollagen-Konzentrat im wesentlichen aus makroskopisch sichtbaren, d.h. mit bloßem Auge sichtbaren Kollagenfasern. Die durchschnittliche Länge der Kollagenfasern beträgt allgemein etwa 3 bis 30 mm, bevorzugt 5 bis 25 mm, besonders bevorzugt 7,5 bis 20 mm.

Das Konzentrat enthält bevorzugt 25 bis 95 Gew.-%, besonders bevorzugt 30 bis 80 Gew.-%, insbesondere 35 bis 70 Gew.-%, an Kollagen-Trockensubstanz, bezogen auf sein Gesamtgewicht. Das Protein kann nach dem Kjeldahl-Verfahren aufgeschlossen werden, um den Gesamt-Stickstoffgehalt zu bestimmen. Durch Multiplizieren mit dem Faktor 5,55 läßt sich auf den Kollagengehalt schließen.

Das Konzentrat hat eine feste Konsistenz und eine hell-beige Farbe, ähnlich einem Pergament. Durch vorheriges Bleichen, beispielsweise Behandeln mit etwa 1 gew.-%iger wäßriger Wasserstoffperoxid-Lösung, kann auch ein rein weißes Konzentrat erhalten werden.

Mikrobiologisch ist das Konzentrat stabil, so daß es ungekühlt auch über längere Zeit (mindestens 6 Monate) lager- und transportfähig ist. Die mikrobiologische Stabilität wurde sowohl durch klassische mikrobiologische Technologien (Abklatsch, Kultivierung auf einem Nährmedium und nachfolgende Auswertung) als auch durch Schnelltests (wie Microarrays, ATP Biolumineszenz und Gensonden) durchgeführt. Auch nach 3, 4 und 6 Monaten zeigte das erfindungsgemäße Kollagen-Konzentrat keine wertmindernde Beeinträchtigung durch Bakterien, Hefen oder Schimmelpilze und war uneingeschränkt zur Herstellung von Nahrungsmittelhüllen geeignet. Das erfindungsgemäße Konzentrat zeigt beim Verdünnen mit Wasser einen pH-Wert von etwa 2,5 bis 3,5. Es enthält zudem noch Salze, insbesondere NaCl, die die Wasseraktivität, d.h. den a_{w}-Wert, herabsetzen. Auch diese Faktoren tragen zur mikrobiologischen Stabilität bei.

Die Herstellung von Kollagenmassen mit einem Kollagenanteil (berechnet auf die Trockenmasse) von 3 bis 15 Gew.-% ist bekannt und beispielsweise in den US-A 3 535 125 und 3 821 429 beschrieben. Als Ausgangsmaterial dienen allgemein Rinder- oder Schweinehäute, wobei Rinderhäute bevorzugt sind. Wie eingangs beschrieben, wird die Spalthaut abgetrennt, alkalisch aufgeschlossen und anschließend gesäuert. Die dabei erhaltene saure (etwa pH 3), stark wasserhaltige Kollagenmasse wird dann konzentriert. Durch Zugabe von Salzen, wie Natriumchlorid, Ammoniumsulfat, Natriumsulfat oder Ammoniumchlorid, gegebenenfalls verbunden mit einer Erhöhung des pH-Werts auf etwa 3,5 bis 7,0, was dem isoelektrischen Bereich entspricht, werden die Kollagenfasern ausgefällt. Eine Ausfällung der Kollagenfasern kann auch allein durch Einstellen des pH-Werts auf einen Wert innerhalb des vorgenannten Bereichs erreichtwerden. Schließlich können die Kollagenfasern durch Zugabe von organischen Lösungsmitteln, wie Ethanol oder Aceton, ausgefällt werden. In allen Fällen wird das Kollagen anschließend abgepreßt, beispielsweise in einer Filterpresse. Da die Kollagenfasern relativ groß sind (durchschnittlich etwa 3 bis 25 mm), reicht als Filter eine Siebplatte oder ein grobes Tuch aus. Aus einer Filterpresse läßt sich so ein festes Kollagen-Konzentrat in Form von Quadern (Platten) mit einer Dicke von etwa 15 bis 40 mm und einer Länge und Breite von jeweils bis zu mehreren Metern (vorzugsweise jeweils 0,3 bis 3 m) erhalten. Es läßt sich in dieser Form sehr gut lagern und transportieren. Prinzipiell kann das Kollagen-Konzentrat auch durch Gefriertrocknen oder Trocknen an der Luft hergestellt werden.

Aus dem Konzentrat lassen sich durch Quellen mit verdünnter wäßriger Säure, beispielsweise einer verdünnten (etwa 0,5 bis 2 gew.-%igen) wäßrigen Essigsäure, Beschichtungsmassen herstellen, die für die Produktion von eßbaren Nahrungsmittelhüllen geeignet sind. Wird die Masse durch eine Ringdüse extrudiert, lassen sich nahtlose eßbare Wursthüllen erhalten. Vorzugsweise werden die Hüllen nach der Extrusion gehärtet, damit sie mechanisch stabiler werden. Das kann beispielsweise durch Behandeln mit Rauch oder Ammoniak erreicht werden.

Der Beschichtungsmasse können zudem übliche Additive beigemischt werden, beispielsweise Cellulose-Fasern, Farbstoffe, Pigmente, anorganische und/oder organische Füllstoffe.

Gegenstand der vorliegenden Erfindung ist demgemäß auch ein Verfahren zur Herstellung einer Nahrungsmittelhülle unter Verwendung des filmbildenden Kollagen-Konzentrats gemäß Anspruch 7.

Das Verfahren umfaßt die Schritte
(a) Herstellen einer wäßrigen Kollagenmasse aus Tierhäuten oder anderen tierischen Quellen;
(b) Konzentrieren derwäßrigen Kollagenmasse bis diese im wesentlichen aus makroskopisch sichtbaren Kollagenfasern besteht und einen Feststoffanteil von 18 Gew.-% oder mehr, bevorzugt von 25 bis 95 Gew.-%, besonders bevorzugt von 30 bis 65 Gew.-%, jeweils bezogen auf das Konzentrat, aufweist;
(c) Versetzen des Konzentrats mit verdünnter wäßriger anorganischer und/oder organischer Säure, um eine Kollagenmasse zu erhalten, die extrudierbar oder gießfähig ist;
(d) Formen der Kollagenmasse aus (c) zu einer Hülle durch ein (Co-)Extrusions-, oder Gießverfahren;
(e) Verfestigen der Hülle sowie
(f) gegebenenfalls Trocknen der Hülle.

Die Herstellung der Kollagenmasse in Schritt a) erfolgt nach Verfahren, die dem Fachmann prinzipiell geläufig und im Stand der Technik vielfach beschrieben sind, z.B. in der DE 32 03 957 C2. Beispielsweise wird der eingangs beschriebene Hautspalt 3 Tage lang mit einer 2 %igen wäßrigen KOH-Lösung behandelt, anschließend 30 min mit kaltem Wasser, dreimal mit 10 %iger wäßriger Kochsalzlösung und anschließend wieder mit Wasser gewaschen. Mit verdünnter Salzsäure wird dann ein pH-Wert von etwa 4 eingestellt. Das so vorbehandelte Material wird dann gewolft und mit Wasser auf ein Trockengewicht von etwa 6 Gew.-% verdünnt. Die in der Spalthaut neben dem Kollagen enthaltenen Begleitproteine und Fette sind dann weitestgehend entfernt.

Konzentriert wird die wäßrige Kollagenmasse insbesondere durch Abpressen des Wassers, beispielsweise in einer Filterpresse. Das Filter kann dabei relativ grob sein. Die Maschenweite des Filters beträgt vorteilhaft etwa 0,1 bis 1,0 mm.

Eine Gefriertrocknung ist demgegenüber mit einem höheren Energieaufwand verbunden. Außerdem ist der Anteil an Proteinen mit einem geringeren Molekulargewicht im Produkt dann höher als bei einem unter Verwendung einer Filterpresse (mit einem weitmaschigen Filter) erhaltenen.

Eßbare Umhüllungen werden vorzugsweise in einem Coextrusionsverfahren hergestellt (Schritt d)). Das Verfestigen der Kollagenmasse erfolgt dann beispielsweise durch Behandeln mit Flüssigrauch oder anderen chemischen Vernetzern, durch entwässernd wirkende Salzlösungen oder durch Erhöhen des pH-Werts bis in den isoelektrischen Bereich des Kollagens (d.h. etwa pH 4 bis 7), wie eingangs beschrieben und aus dem Stand der Technik bekannt.

Das Verfestigen der Hülle (Schritt e)) erfolgt vorzugsweise durch chemisches Vernetzen, beispielsweise mit einem Vernetzungsmittel, wie Glutaraldehyd, Glyoxal, Flüssigrauch, Zuckerodereinem mineralischen Gerbmittel. Dieses Mittel kann bereits mit der Extrusionsmasse vermischt sein und/oder nachträglich angewendet werden.

Nicht eßbare Nahrungsmittelhüllen lassen sich erhalten, wenn Papier, Textil (Gewebe, Gewirke, Gelege, Vliese usw.) oder ein anderer flächiger Träger mit der Kollagenmasse beschichtet wird. Bei der Extrusion kann die Kollagenmasse auf eine oder beide Seiten eines flächenförmigen Trägers aufgebracht werden. Der Träger ist beispielsweise ein - vorzugsweise naßfestes - Faserpapier (insbesondere ein naßfestes Hanffaserpapier) oder ein Textilmaterial (insbesondere in Gewebe, Gewirke, Gelege oder ein Vlies).

Wird bei der Extrusion oder Coextrusion eine Ringschlitzdüse verwendet, so lassen sich nahtlose schlauchförmige Nahrungsmittelhüllen erhalten, die sich besonders gut als künstliche Wursthüllen eignen.

Getrocknet wird die Hülle zweckmäßigerweise bis auf eine Endfeuchte von 8 bis 20 Gew.-%, bezogen auf das Gesamtgewicht der Hülle. Im Fall einer Übertrocknung wird durch Besprühen mit Wasser der gewünschte Feuchtegehalt eingestellt.

Die nach dem erfindungsgemäßen Verfahren hergestellte Nahrungsmittelhülle hat allgemein ein Trockengewicht von 20 bis 200 g/m², bevorzugt von 35 bis 90 g/m². Verwendet wird die erfindungsgemäße Konzentrat insbesondere bei der Herstellung von künstlichen Wursthüllen, insbesondere von eßbaren, d.h. für den Mitverzehr geeigneten Wursthüllen. Solche Wursthüllen werden mit besonderem Vorteil aus einer aus dem Konzentrat hergestellten Coextrusionsmasse zeitgleich mit der Herstellung der Wurst geformt.

Die folgenden Beispiele dienen zur Erläuterung der Erfindung. Prozente sind darin Gewichtsprozente, soweit nicht anders angegeben oder aus dem Zusammenhang unmittelbar ersichtlich.

### Charakterisierung der Kollagen-Konzentrate

### Kollagen-Konzentrat I (erfindungsgemäß):

Anteil an Kollagen-Trockensubstanz (bestimmt wie oben angegeben): 35,3 %

Eine Probe des Konzentrats wurde in einem auf pH 7 eingestellten 0,15 molaren wäßrigen Natriumdihydrogenphosphat-Puffer (Puffer 1) gelöst bzw. suspendiert bis die Lösung rechnerisch 0,5 % an Kollagen-Trockensubstanz enthielt. Die Suspension wurde dann 1 h lang bei 500 U/min in einem Becherglas bei 20 °C gerührt, wobei eine makroskopisch homogene Masse erhalten wurde. Die Suspension wurde dann bei relativ geringer Umdrehungszahl zentrifugiert (1780 RFC; 15 °C; 15 min), der Überstand anschließend über ein Siebgewebe mit einer Maschenweite von 60 µm unter Anwendung von Unterdruck filtriert. Das Filtrat wurde sodann über ein Siebgewebe mit einer Maschenweite von 1,2 µm filtriert. Das dabei erhaltene Filtrat wurde erneut filtriert, diesmal über ein Siebgewebe mit einer Maschenweite von 0,45 µm. Der Bodensatz wie auch die Filterrückstände bei den einzelnen Filtrationen wurden getrocknet (je 1,5 h bei 40 °C, bei 60 °C und bei 80 °C, dann 16 h lang bei 101 °C) und ausgewogen. Die Gewichte der einzelnen Fraktionen nach dem Trocknen sind in der nachfolgenden Tabelle 1 zusammengestellt.

An einer weiteren Probe wurden die beschriebenen Fraktionierungsschritte wiederholt, wobei jedoch anstelle eines wäßrigen Natriumdihydrogenphosphat-Puffers ein 0,15 molarerwäßrigerAmmoniumcarbonat-Puffer, ebenfalls mit einem pH von 7, eingesetzt wurde (Puffer 2).

An einerdritten Probe wurden die Fraktionierungsschritte nochmals wiederholt, wobei nunmehr jedoch der pH-Wert durch Zusatz von Essigsäure auf einen Wert von 3,5 eingestellt war (Puffer 3).

**Tabelle 1**

| Puffer | 1 (pH 7) | 2 (pH 7) | 3 (pH 3,5) |
|---|---|---|---|
| nicht zentrifugiert / unfiltriert | 0,3528 g | 0,4502 g | 0,4502 g |
| Bodensatz nach dem Zentrifugieren (1780 RFC; 15 °C; 15 min) | 0,3386 g | 0,4146 g | 0,4012 g |
| Filterrückstand nach Filtration 60 µm | 0,0013 g | 0,0008 g | 0,0016 g |
| Filterrückstand nach Filtration 1,2 µm | 0,0072 g | 0,0011 g | 0,0151 g |
| Filterrückstand nach Filtration 0,45 µm | 0,0036 g | 0,0028 g | 0,0017 g |
| Filterrückstand nach Filtration 0,2 µm | 0,0002 g | 0,0004 g | 0,0039 g |

In dem Überstand nach dem Zentrifugieren befanden sich demnach 3,48 % der Kollagen-Trockensubstanz, während 96 % der Kollagen-Trockensubstanz ein so hohes Molekulargewicht aufwiesen, daß sie sich bereits durch die relativ milde Zentrifugation abtrennen ließen.

Mehr als 99,5 % des Kollagens ließen sich, wie beschrieben, durch Zentrifugieren und Filtrieren abtrennen.

### Kollagen-Konzentrat II (erfindungsgemäß):

Anteil an Kollagen-Trockensubstanz (Bestimmung: s.o.): 29,2 %

Wie in Tabelle 2 dargestellt, wurde die Fraktionierung in der gleichen Weise wie bei dem Kollagen-Konzentrat I mit den dort genannten drei verschiedenen Puffern bei zwei verschiedenen pH-Werten (pH 7 und pH 3,5) durchgeführt.

**Tabelle 2**

| Puffer | 1 (pH 7) | 2 (pH 7) | 3 (pH 3,5) |
|---|---|---|---|
| nicht zentrifugiert / unfiltriert | 0,2918 g | 0,3002 g | 0,3002 g |
| Bodensatz nach dem Zentrifugieren (1780 RFC; 15 °C; 15 min) | 0,2613 g | 0,2736 g | 0,2561 g |
| Filterrückstand nach Filtration 60 µm | 0,0042 g | 0,0012 g | 0,0018 g |
| Filterrückstand nach Filtration 1,2 µm | - | 0,0019 g | 0,0077 g |
| Filterrückstand nach Filtration 0,45 µm | - | 0,0008 g | 0,0189 g |
| Filterrückstand nach Filtration 0,2 µm | - | 0,0031 g | 0,0098 g |

Durch Zentrifugieren unter den genannten Bedingungen ließen sich somit 89,5 % des Kollagens abtrennen.

Durch Zentrifugieren und Filtrieren (in diesem Fall bis zu einer Siebgröße von 60 µm) ließen sich 91 % des Kollagens abtrennen.

### Beispiel 1

Aus 5 kg einer auf herkömmliche Art hergestellten Extrusionsmasse auf Basis von Rinderhaut-Kollagen wurde durch Zusatz von Natriumchlorid Kollagenfasern ausgefällt. Die Kollagenfasern wurden dann in einer Filterpresse abgepreßt bis der Kollagenanteil (bezogen auf Trockenkollagen) bei 35 % lag. Der etwa 1 kg schwere Preßkuchen ließ sich in Kunststoff-Fässern oder -Tüten bei 20 °C mehrere Monate lang ohne Zeichen von Verderb lagern.

Um daraus wieder eine (co-)extrudierbare Masse herzustellen, wurde 1 kg des Preßkuchens mit 4 kg Eis, 3 l einer 4 %igen wäßrigen Essigsäure und 15 g einer 80 %igen wäßrigen Milchsäure in einem Kutter 5 min lang gemischt und anschließend homogenisiert. Der pH-Wert der Masse wurde mit verdünnter Essigsäure auf 2,8 eingestellt.

Mit Hilfe einer Coextrusions-Vorrichtung, wie sie beispielsweise von Storck/Townsend Protecon erhältlich ist, wurde dann in einem Schritt eine Brühwurst hergestellt, die mit einer *in situ* bei der Coextrusion gebildeten Kollagenhülle umgeben war. Verfestigt wurde die Hülle durch Besprühen mit einer Flüssigrauchlösung. Eingesetzt wurde dabei ein natürlicher, saurer Flüssigrauch.

Mehrere Brühwürste wurden dann in einen PE-Folienbeutel eingeschweißt und anschließend pasteurisiert (75 °C).

### Beispiel 2

Wie im Beispiel 1 beschrieben wurde auf herkömmliche Weise eine Extrusionsmasse auf Basis von Rinderhaut-Kollagen hergestellt, aus der dann durch Zusatz von NaCl Kollagenfasern ausgefällt wurden. Die Kollagenfasern wurden in einer Filterpresse abgepreßt bis ein Anteil an Kollagen-Trockensubstanz von 60 % erreicht war. Der erhaltene Preßkuchen wurde 7 Monate lang bei 20 °C in Kunststoff-Fässern oder -Tüten gelagert. Nach 3 sowie nach 6 Monaten wurden mikrobiologische und lebensmitteldiagnostische Untersuchungen durchgeführt. Sie zeigten, daß das Konzentrat keine wertmindernden Beeinträchtigungen durch Bakterien, Hefen oder Schimmelpilze aufwies und ohne Einschränkungen für die Herstellung von eßbaren Wursthüllen geeignet war.

Die Herstellung der coextrudierbaren Masse aus dem Konzentrat sowie die Herstellung der Wurst erfolgten wie im Beispiel 1 beschrieben.

### Beispiel 3

Aus dem im Beispiel 1 genannten Kollagen-Konzentrat wurde, wie beschrieben, eine extrudierbare Masse hergestellt. Die Masse wurde mit 0,8 Gew.-% Cellulosefasern einer durchschnittlichen Länge von 300 bis 700 µm vermischt und in einem Naßspinnverfahren durch eine Ringschlitzdüse zu einer Hülle extrudiert. Die Hülle wurde auf bekannte Weise verfestigt und getrocknet. Sie hatte einen Durchmesser von 21 mm bei einer Wandstärke von 40 µm.

Die Eigenschaften der unter Verwendung des Konzentrats hergestellten Wusthülle unterschieden sich praktisch nicht von denen einer auf dem "direkten" Weg hergestellten Hülle. Die Hülle ist besonders geeignet für Würstchen und Bratwurst. Siewarzudem sehrgut räucherbar, was insbesondere fürWürstchen von Bedeutung ist.

## Patentansprüche

1. Filmbildendes Kollagen-Konzentrat, **dadurch gekennzeichnet, daß** es mindestens 18 Gew.-% Kollagen-Trockensubstanz, bezogen auf das Gesamtgewicht des Konzentrats, enthält, wobei die Trockensubstanz im wesentlichen aus makroskopisch sichtbaren Kollagenfasern besteht und wobei sich mindestens 50 Gew.-% des Proteins aus einer aus dem Konzentrat hergestellten homogenen Suspension in einem 0,15 molaren wäßrigen Natriumdihydrogenphosphat-Puffer mit einem pH von 7 und einem Anteil an Trockensubstanz von 0,5 Gew.-% durch 15 min Zentrifugieren bei 1780 RFC und 15 C als Bodensatz abtrennen lassen

2. Kollagen-Konzentrat gemäß Anspruch 1, **dadurch gekennzeichnet, daß** sich mindestens 60 bis 92,5 Gew.-% des Proteins in der Suspension durch Zentrifugieren bei 1780 RFC abtrennen lassen.

3. Kollagen-KonzentratgemäßAnspruch 1 oder2, **dadurch gekennzeichnet, daß** sich durch Zentrifugieren bei 1780 RFC (15 C; 15 min) und Absaugen über ein Sieb mit einer Maschenweite von 60 µm mindestens 60 Gew.-% bis 95 Gew.-% des Proteins in der Suspension abtrennen lassen.

4. Kollagen-Konzentrat gemäß einem oder mehreren der Ansprüche 1 bis 3, **dadurch gekennzeichnet, daß** es 25 bis 95 Gew.-%, besonders bevorzugt 30 bis 65 Gew.-% Trockensubstanz enthält, bezogen auf sein Gesamtgewicht.

5. Kollagen-Konzentrat gemäß Anspruch 1 oder 2, **dadurch gekennzeichnet, daß** die Kollagenfasern bevorzugt eine Länge von 3 bis 30 mm, besonders bevorzugt 5 bis 25 mm, insbesondere 7,5 bis 20 mm, aufweisen.

6. Kollagen-Konzentrat gemäß einem oder mehreren der Ansprüche 1 bis 5, **dadurch gekennzeichnet, daß** es die Form eines Quaders mit einer Dicke von 15 bis 40 mm und einer Länge und Breite von jeweils 0,3 bis 3 m aufweist.

7. Verfahren zur Herstellung einer Nahrungsmittelhülle, insbesondere einer künstlichen Wursthülle, unter Verwendung eines Kollagen-Konzentrats, **dadurch gekennzeichnet, daß** es die folgenden Schritte umfaßt:
(a) Herstellen einerwäßrigen Kollagenmasse aus Tierhäuten oder anderen tierischen Quellen;
(b) Konzentrieren der wäßrigen Kollagenmasse bis diese im wesentlichen aus makroskopisch sichtbaren Kollagenfasern besteht und einen Feststoffanteil von 18 Gew.-% oder mehr, bevorzugt von 25 bis 80 Gew.-%, jeweils bezogen auf das Konzentrat, aufweist;
(c) Versetzen des Konzentrats mit Wasser oder verdünnter wäßriger anorganischer und/oder organischer Säure, um eine Kollagenmasse zu erhalten, die extrudierbar oder gießfähig ist;
(d) Formen der Kollagenmasse aus (c) zu einer Hülle durch ein (Co-) Extrusions- oder Gießverfahren;
(e) Verfestigen der Hülle und gegebenenfalls
(f) Trocknen der Hülle.

8. Verfahren gemäß Anspruch 7, **dadurch gekennzeichnet, daß** zum Konzentrieren in Schritt b) eine Filterpresse eingesetzt wird.

9. Verfahren gemäß Anspruch 7 oder 8, **dadurch gekennzeichnet, daß** in Schritt b) Salze, bevorzugt Natriumchlorid, Ammoniumsulfat, Natriumsulfat oder Ammoniumchlorid, zugegeben werden, die Kollagenfasern aus der Kollagenmasse ausfällen.

10. Verfahren gemäß Anspruch 7, 8 oder 9, **dadurch gekennzeichnet, daß** in Schritt b) der pH-Wert auf etwa 3,5 bis 7,0 erhöht wird.

11. Verfahren gemäß Anspruch 7 oder 8, **dadurch gekennzeichnet, daß** in Schritt b) ein organisches Lösungsmittel oder Lösungsmittelgemisch mit der Kollagenmasse vermischt wird um die Kollagenfasern aus der Kollagenmasse auszufällen.

12. Verfahren gemäß Anspruch 7, **dadurch gekennzeichnet, daß** die Kollagenmasse in Schritt a) zusätzlich mit einem Bleichmittel, bevorzugt Wasserstoffperoxid, versetzt wird.

13. Verfahren gemäß Anspruch 7 oder 8, **dadurch gekennzeichnet, daß** in Schritt c) Milchsäure oder Essigsäure als organische Säure verwendet wird.

14. Verwendung des Kollagen-Konzentrats gemäß einem oder mehreren der Ansprüche 1 bis 6 bei der Herstellung von künstlichen Wursthüllen, insbesondere von eßbaren künstlichen Wursthüllen.

## Claims

1. A film-forming collagen concentrate which contains at least 18 % by weight of collagen dry matter, based on the total weight of the concentrate, wherein the dry matter consists essentially of macroscopically visible collagen fibers and wherein at least 50 % by weight of the protein of a homogeneous suspension produced from the concentrate in a 0.15 molar aqueous sodium dihydrogenphosphate buffer having a pH of 7 and a dry matter fraction of 0.5 % by weight may be separated as sediment by 15 min centrifugation at 1780 RFC and 15 °C.

2. The collagen concentrate as claimed in claim 1, wherein at least 60 to 92.5 % by weight of the protein in the suspension may be separated off by centrifugation at 1780 RFC.

3. The collagen concentrate as claimed in claim 1 or 2, wherein, by centrifugation at 1780 RFC (15 °C; 15 min) and vacuum filtration through a sieve having a mesh width of 60 µm, at least 60 % by weight to 95 % by weight of the protein in the suspension may be separated off.

4. The collagen concentrate as claimed in one or more of claims 1 to 3, wherein it contains 25 to 95 % by weight, particularly preferably 30 to 65 % by weight, of dry matter, based on its total weight.

5. The collagen concentrate as claimed in claim 1 or 2, wherein the collagen fiber preferably has a length of 3 to 30 mm, particularly preferably 5 to 25 mm, in particular 7.5 to 20 mm.

6. The collagen concentrate as claimed in one or more of claims 1 to 5, wherein it has the shape of a cuboid having a thickness of 15 to 40 mm and a length and width each of 0.3 to 3 m.

7. A process for producing a food casing, in particular an artificial sausage casing, using a collagen concentrate, wherein the process comprises the following steps:
(a) producing an aqueous collagen mass from animal hides or other animal sources;
(b) concentrating the aqueous collagen mass until it consists essentially of macroscopically visible collagen fibers and has a solids fraction of 18 % by weight or more, preferably 25 to 80 % by weight, in each case based on the concentrate;
(c) admixing the concentrate with water or dilute aqueous inorganic and/or organic acid in order to obtain a collagen mass which is extrudable or castable;
(d) shaping the collagen mass from (c) to form a casing by a (co)extrusion or casting process;
(e) solidifying the casing and, if appropriate,
(f) drying the casing.

8. The process as claimed in claim 7, wherein a filter press is used for the concentration in step b).

9. The process as claimed in claim 7 or 8, wherein, in step b), salts, preferably sodium chloride, ammonium sulfate, sodium sulfate or ammonium chloride, are added which precipitate out collagen fibers from the collagen mass.

10. The process as claimed in claim 7, 8 or 9, wherein, in step b), the pH is elevated to about 3.5 to 7.0.

11. The process as claimed in claim 7 or 8, wherein, in step b), an organic solvent or solvent mixture is mixed with the collagen mass in order to precipitate the collagen fibers out of the collagen mass.

12. The process as claimed in claim 7, wherein the collagen mass in step a) is additionally admixed with a bleaching agent, preferably hydrogen peroxide.

13. The process as claimed in claim 7 or 8, wherein, in step c), use is made of lactic acid or acetic acid as organic acid.

14. The use of the collagen concentrate as claimed in one or more of claims 1 to 6 in the production of artificial sausage casings, in particular of edible artificial sausage casings.

## Revendications

1. Concentré de collagène formant un film, **caractérisé en ce qu'**il contient au moins 18 % en pourcentage pondéral de matière sèche de collagène, rapporté au poids total du concentré, la matière sèche étant constituée globalement de fibres de collagène macroscopiquement visibles et au moins 50 % en pourcentage pondéral de la protéine pouvant être séparé, sous forme de dépôt, d'une suspension homogène fabriquée à partir du concentré dans une solution tampon aqueuse de dihydrogénophosphate de sodium à 0,15 molaire avec un pH de 7 et avec une proportion de matière sèche de 0,5 % en pourcentage pondéral, au moyen de 15 minutes de centrifugation à 1780 RFC et 15 °C.

2. Concentré de collagène selon la revendication 1, **caractérisé en ce qu'**au moins 60 à 92,5 % en pourcentage pondéral de la protéine dans la suspension peut être séparé par centrifugation à 1780 RFC.

3. Concentré de collagène selon la revendication 1 ou 2, **caractérisé en ce qu'**au moins 60 à 95 % en pourcentage pondéral de la protéine dans la suspension peut être séparé par centrifugation à 1780 RFC (15 °C, 15 minutes) et par aspiration via un tamis ayant une largeur de maille de 60 µm.

4. Concentré de collagène selon une ou plusieurs des revendications 1 à 3, **caractérisé en ce qu'**il contient 25 à 95 % en pourcentage pondéral de matière sèche, en particulier de préférence de 30 à 65 % en pourcentage pondéral, rapporté à son poids total.

5. Concentré de collagène selon la revendication 1 ou 2, **caractérisé en ce que** les fibres de collagène ont de préférence une longueur comprise entre 3 et 30 mm, en particulier de préférence entre 5 et 25 mm, notamment entre 7,5 et 20 mm.

6. Concentré de collagène selon une ou plusieurs des revendications 1 à 5, **caractérisé en ce qu'**il a la forme d'un parallélépipède avec une épaisseur de 15 à 40 mm et avec une longueur et une largeur de 0,3 à 3 m chacune.

7. Procédé de fabrication d'une enveloppe de produit alimentaire, notamment d'une enveloppe synthétique de saucisse ou de saucisson, en utilisant un concentré de collagène, **caractérisé en ce qu'**il comprend les étapes suivantes :
(a) fabrication d'une masse de collagène aqueuse à partir de peaux d'animaux ou d'autres origines animales ;
(b) concentration de la masse de collagène aqueuse jusqu'à ce que celle-ci soit constituée globalement de fibres de collagène macroscopiquement visibles et ait une proportion de matière solide de 18 % ou plus en pourcentage pondéral, de préférence comprise entre 25 et 80 %, à chaque fois rapporté au concentrat ;
(c) mélange du concentrat avec de l'eau ou avec un acide anorganique et/ou organique aqueux dilué pour obtenir une masse de collagène qui peut être extrudée ou coulée ;
(d) mise en forme de la masse de collagène issue de (c) en une enveloppe au moyen d'un procédé de (co-) extrusion ou de coulage ;
(e) consolidation de l'enveloppe et éventuellement
(f) séchage de l'enveloppe.

8. Procédé selon la revendication 7, **caractérisé en ce qu'**un filtre-presse est utilisé pour la concentration à l'étape (b).

9. Procédé selon la revendication 7 ou 8, **caractérisé en ce que** l'on ajoute à l'étape (b) des sels, de préférence du chlorure de sodium, du sulfate d'ammonium, du sulfate de sodium ou du chlorure d'ammonium, qui précipitent des fibres de collagène à partir de la masse de collagène.

10. Procédé selon la revendication 7, 8 ou 9, **caractérisé en ce que**, dans l'étape (b), la valeur de pH est augmentée à environ 3,5 à 7,0.

11. Procédé selon la revendication 7 ou 8, **caractérisé en ce que**, dans l'étape (b), un solvant organique ou un mélange de solvants organiques est mélangé à la masse de collagène pour précipiter les fibres de collagène à partir de la masse de collagène.

12. Procédé selon la revendication 7, **caractérisé en ce que** la masse de collagène dans l'étape (a) est mélangée en plus avec un agent de blanchiment, de préférence avec de l'eau oxygénée.

13. Procédé selon la revendication 7 ou 8, **caractérisé en ce que**, dans l'étape (c), de l'acide lactique ou de l'acide acétique est utilisé comme acide organique.

14. Utilisation du concentré de collagène selon une ou plusieurs des revendications 1 à 6 lors de la fabrication d'enveloppes synthétiques de saucisses ou de saucissons, notamment d'enveloppes synthétiques comestibles de saucisses ou de saucissons.
